# EUROPÄISCHE PATENTSCHRIFT

(11) **EP 1 003 021 B1**
(45) Veröffentlichungstag und Bekanntmachung des Hinweises auf die Patenterteilung: **08.08.2001**
(21) Anmeldenummer: 99120333.2
(22) Anmeldetag: 12.10.1999
(51) Int. Cl.: G01L 9/00, G01L 19/00

(54) **Halbleiterbauelement mit einem Drucksensor und einem Halbleiterchip**
Semiconductor device comprising a pressure sensor and a semiconductor chip
Dispositif semi-conducteur comprenant un capteur de pression et une puce à semiconducteur

(30) Priorität: 17.11.1998 DE 19852968
(43) Veröffentlichungstag der Anmeldung: 24.05.2000
(73) Patentinhaber: Micronas GmbH, 79108 Freiburg (DE)
(72) Erfinder: Igel, Günter, Dipl.-Ing., 79331 Teningen (DE)
(74) Vertreter: Patent- und Rechtsanwaltssozietät, Maucher, Börjes & Kollegen

(56) Entgegenhaltungen:
- EP-A- 0 809 966
- FRANK R: "PRESSURE SENSORS MERGE MICROMACHINING AND MICROELECTRONICS*" SENSORS AND ACTUATORS A,CH,ELSEVIER SEQUOIA S.A., LAUSANNE, Bd. A28, Nr. 2, 1. Juli 1991 (1991-07-01), Seiten 93-103, XP000225375 ISSN: 0924-4247
- PONS P ET AL: "LOW-COST HIGH-SENSITIVITY INTEGRATED PRESSURE AND TEMPERATURE SENSOR" SENSORS AND ACTUATORS A,CH,ELSEVIER SEQUOIA S.A., LAUSANNE, Bd. A42, Nr. 1/03, 15. April 1994 (1994-04-15), Seiten 398-401, XP000449948 ISSN: 0924-4247

## Beschreibung

Die Erfindung bezieht sich auf ein Halbleiterbauelement, mit mindestens einem Drucksensor und einem Halbleiterchip, der für wenigstens eine zusätzliche Funktion des Halbleiterbauelements eine Halbleiter-Struktur aufweist, und mit einem mit dem Halbleiterchip verbundenen Gehäuse.

Ein solches Halbleiterbauelement ist aus R. Frank, Pressure sensors merge micromechaning and microelectronics, Sensors and Actuators A, 28 (1991) 93-103 bekannt. Es weist einen Halbleiterchip auf, in dessen Substrat von der Rückseite her eine Vertiefung eingeätzt ist, welche die Wandstärke des Halbleiterchips bereichsweise reduziert. Im Bereich der Vertiefung ergibt sich dadurch an der vorderen Flachseite des Halbleiterchips eine in der Oberflächenebene des Halbleiterchips angeordnete Membran aus Halbleitermaterial, die durch Druckbeaufschlagung gegen die Rückstellkraft des Halbleitermaterials auslenkbar ist. An der Membran ist eine Meßbrücke angeordnet, die Dehnungsmeßwiderstände zum Messen der durch die Druckbeaufschlagung bewirken Biegeverformung der Membran aufweist. Der Halbleiterchip weist ferner eine Halbleiterstruktur für zusätzliche Funktionen des Halbleiterbauelements auf. Diese umfaßt einen Schaltkreis zur Temperaturkompensation des Drucksensors sowie einen Mikrocomputer mit einem Speicher und einer Ein-/Ausgabeschnittstelle für eine Kommunikation mit einem externen Rechner.

Das vorbekannte Halbleiterbauelement hat den Nachteil, daß für die Membran eine relativ große Chipfläche auf dem Halbleiterchip reserviert werden muß, wodurch die Kosten für die Herstellung des Halbleiterbauelements erhöht werden. Ungünstig ist außerdem, daß die Membran bei Druckbeaufschlagung auf Biegung beansprucht wird und daß sich die Biegespannungen in zu der Membran benachbarte Bereiche des Halbleiterchips fortsetzen und die elektrischen Eigenschaften der dort befindlichen Halbleiter-Struktur verändern können. So kann es beispielsweise bei Druckbeaufschlagung der Membran zu einer mechanischen Verspannung in der Struktur befindlichen Kristallebenen kommen, wodurch in dem Halbleitermaterial elektrische Spannungen entstehen, welche beispielsweise die Sperrspannung von in der Struktur befindlichen pn-Übergängen verändern können. Die zusätzliche Funktion des Halbleiterchips kann dadurch beeinträchtigt oder gestört werden. Ein weiterer Nachteil des Halbleiterbauelements besteht darin, daß der Halbleiterchip zum Herstellen der Membran an der Rückseite maskiert und geätzt werden muß, was einen zusätzlichen Arbeitsschritt erfordert.

Es besteht deshalb die Aufgabe, ein Halbleiterbauelement der eingangs genannten Art zu schaffen, bei dem bei Beaufschlagung des Drucksensors mit Druck eine Beeinträchtigung der zusätzlichen Funktion des Halbleiterbauelements vermieden wird. Das Halbleiterbauelement soll außerdem kostengünstig herstellbar sein.

Die Lösung dieser Aufgabe besteht darin, daß der Halbleiterchip mit dem Gehäuse über eine elastische Trägeranordnung verbunden ist, daß der Halbleiterchip insgesamt gegen die Rückstellkraft des Werkstoffs der Trägeranordnung relativ zu dem Gehäuse auslenkbar ist und daß zur indirekten Messung eines auf den Halbleiterchip einwirkenden, eine Auslenkung bewirkenden Drucks wenigstens ein mit dem Halbleiterchips zusammenwirkender Lagesensor gebildet ist.

Der Halbleiterchip wird also bei Beaufschlagung mit Druck insgesamt und somit unter Vermeidung einer Änderung seiner geometrischen Abmessungen relativ zu dem Gehäuse ausgelenkt. Eine mechanische Beanspruchung des Halbleiterchips und die Ausbildung von Biege- oder zugspannungen sowie eine damit einhergehende elektrische Beeinflussung der für die zusätzlichen Funktion vorgesehenen Halbleiterstruktur werden vermieden. Dadurch kann einerseits die zusätzliche Funktion mit größerer Genauigkeit ausgeführt werden und andererseits weist das Halbleiterbauelement aber auch eine größere Betriebssicherheit auf, was beispielsweise dessen Einsatz in einem größeren Temperaturbereich ermöglicht. Da eine in den Halbleiterchip integrierte Membran entfällt, ergibt sich außerdem eine wesentlich kleinere Chipfläche, was eine kostengünstige Herstellung des Halbleiterchips ermöglicht. Der für die indirekte Messung des eine Auslenkung des Halbleiterchips bewirkenden Drucks vorgesehene Lagesensor kann beispielsweise ein optischer, induktiver oder magnetischer, vorzugsweise berührungsloser Sensor sein, der gegebenenfalls ganz oder teilweise mit in den Halbleiterchip integriert sein kann.

Eine besonders vorteilhafte Ausführungsform der Erfindung sieht vor, daß der Lagesensor einen Kondensator mit wenigstens zwei Elektroden aufweist, von denen die eine Bestandteil des Halbleiterchips und die andere an dem Gehäuse angeordnet ist. Dabei ist die Kapazität des Kondensators umgekehrt proportional zum Abstand der beiden Elektroden. Die Auslenkung des Halbleiterchips ist von der Federcharakteristik der Trägeranordnung abhängig und kann beispielsweise linear zu dem an der Trägeranordnung und/oder dem Halbleiterchip angreifenden Druck sein. Die Kapazität ist dann umgekehrt proportional zum Druck. Die kapazitive Lagemessung ermöglicht ein besonders einfach aufgebautes Halbleiterbauelement, wobei eine der Kondensatorelektroden beispielsweise durch einen elektrisch leitfähigen Gehäusebereich und die andere Kondensatorelektrode durch eine an dem Halbleiterchip befindliche, elektrisch leitfähige Schicht und/oder durch das Substrat des Halbleiters gebildet sein kann.

Vorteilhaft ist, wenn die Trägeranordnung an ihrer dem Halbleiterchip zugewandten Seite elektrische Leiterbahnen zum Verbinden von an dem Gehäuse angeordneten Anschlußkontakten mit Anschlußstellen des Halbleiterchips aufweist. Die Versorgungsspannung für den Halbleiterchip, elektrische Steuer- und/oder Meßsignale können dann auf einfache Weise zwischen den an dem Gehäuse befindlichen Anschlußkontakten und dem Halbleiterchip übertragen werden. Die Leiterbahnen können beispielsweise auf die Trägeranordnung aufgedruckt sein, was eine kostengünstige Herstellung der Trägeranordnung ermöglicht. Gegebenenfalls kann auch die an dem Gehäuse befindliche Kondensatorelektrode über eine der Leiterbahnen mit der auf dem Halbleiterchip befindlichen Struktur verbunden sein, die beispielsweise eine Steuer- und/oder Auswerteeinrichtung umfassen kann.

Eine besonders vorteilhafte Ausführungsform der Erfindung sieht vor, daß die Leiterbahnen mittels Flip-Chip-Technik mit den Anschlußstellen des Halbleiterchips und/oder den Anschlußkontakten des Gehäuses verbunden sind. Dabei können an den Anschlußstellen des Halbleiterchips und/oder den Leiterbahnen der Trägeranordnung Bumps als elektrische Kontaktierung vorgesehen sein. Diese können beispielsweise mit den ihnen zugeordneten Gegenkontakten verlötet oder auf andere Weise verbunden sein. An den in Flip-Chip-Technik ausgebildeten Verbindungsstellen kann zwischen den Leiterbahnen und den Anschlußstellen des Halbleiterchips beziehungsweise den Anschlußkontakten des Gehäuses auch eine Kunststoffmasse mit darin befindlichen, leitfähigen Partikeln angeordnet sein, welche die Leiterbahnen elektrisch mit den Anschlußstellen beziehungsweise den Anschlußkontakten verbinden. Durch die Flip-Chip-Technik können Bond-Drähte zwischen den miteinander zu verbindenden Kontaktstellen entfallen, wodurch die Montage des Halbleiterbauelements wesentlich vereinfacht wird.

Eine bevorzugte Ausführungsform der Erfindung sieht vor, daß die Trägeranordnung wenigstens ein gegen die Rückstellkraft seines Werkstoffs elastisch biegbares, den Halbleiterchip tragendes Substrat aufweist, daß das Substrat vorzugsweise brückenartig, mit einander abgewandten Endbereichen an dem Gehäuse angreifend ausgebildet ist und daß der Halbleiterchip im Verlauf zwischen diesen Endbereichen mit dem Substrat fest verbunden ist. Dadurch ergibt sich eine weitgehend symmetrische Trägeranordnung, die bei Beaufschlagung mit dem zu messenden Druck eine etwa parallele Verschiebung des Halbleiterchips und einer eventuell daran befindlichen Kondensatorelektrode bewirkt.

Eine Ausführungsform der Erfindung sieht vor, daß das Substrat eine Folie, insbesondere eine Kunststoffolie ist. Diese kann beispielsweise aus Polyimid, Polyethylen oder Polyvinylchlorid bestehen. Die Folie greift vorzugsweise an ihrem umfangsseitigen Rand an dem Gehäuse an oder ist dort eingespannt. Das Substrat ist vorzugsweise mittig zwischen einander gegenüberliegenden, an dem Gehäuse angreifenden Randbereichen der Folie angeordnet und dort mit der Folie fest verbunden.

Vorteilhaft ist, wenn das Substrat in dem Zwischenbereich zwischen dem Halbleiterchip und dem Gehäuse zumindest bereichsweise einen verringerten Materialquerschnitt aufweist. Das Substrat kann dazu beispielsweise einen Wandungsbereich mit geringerer Dicke und/oder einer Perforation aufweisen. Dadurch ergibt sich bereichsweise eine größere Elastizität, wodurch kleine Drücke besser gemessen werden können.

Bei einer vorteilhaften Ausführungsform der Erfindung weist der Halbleiterchip wenigstens eine als Sensor ausgebildete Struktur auf, die an einer Flachseite des Halbleiterchips eine aktive Sensorfläche hat, wobei das Substrat mindestens ein Durchgangsloch aufweist und der Halbleiterchip mit der Sensorfläche dem Durchgangsloch zugewandt mit dem Substrat verbunden ist. Das Durchgangsloch und der Halbleiterchip umgrenzen dann ein Probenbehältnis, in dem ein zu untersuchendes Medium angeordnet werden kann. Zum Untersuchen dieses Mediums kann der Halbleiter-Chip beispielsweise einen chemischen, optischen und/oder einen magnetischen Sensor aufweisen. In dem Probenbehältnis kann ein Nährmedium mit darin befindlichen lebenden biologischen Zellen angeordnet werden. Dabei können sich die Zellen gegebenenfalls an der Sensorfläche des Halbleiterchip adhärent anlagern, so daß mit dem Sensor elektrische Signale an den Zellen gemessen werden können. Der durch das Durchgangsloch und den Halbleiterchip begrenzte Probenraum kann mit einer Pumpe zum Austauschen des Nährmediums verbunden sein. Mit dem in dem Halbleiterbauelement befindlichen Drucksensor kann dann der von der Pumpe in dem Probenbehältnis bewirkte Druck, der zu Veränderungen an den elektrischen Signalen der biologischen Zellen führen kann, unmittelbar gemessen werden. Der Druck in dem Probenbehältnis kann dann gegebenenfalls bei der Auswertung der an den Zellen gemessenen Signale berücksichtigt werden.

Zweckmäßigerweise ist zwischen dem Substrat und dem Halbleiterchip eine das Durchgangsloch umgrenzende Dichtung angeordnet, die insbesondere zwischen der aktiven Sensorfläche und den Anschlußstellen des Halbleiterchips angeordnet ist. Ein in dem durch das Durchgangsloch gebildeten Probenbehältnis befindliches chemisch aggressives Medium kann dadurch von den Anschlußstellen des Halbleiterchips ferngehalten werden. Eine Korrosion an den Anschlußstellen wird dadurch vermieden.

Vorteilhaft ist, wenn zwischen dem Halbleiterchip und dem Substrat ein Spalt, insbesondere ein Kapillarspalt gebildet ist und wenn in den Spalt eine Kunststoffvergußmasse eingefüllt ist. Der Spalt kann dann bei der Herstellung des Halbleiterbauelements auf einfache Weise in Underfill-Technik mit der Kunststoffvergußmasse gefüllt werden. Dabei wird die Kunststoffvergußmasse vorzugsweise von der dem Halbleiterchip zugewandten Seite des Substrats in den Kapillarspalt eingefüllt, um einen Kontakt zwischen der Kunststoffvergußmasse und der im Bereich des Durchgangslochs befindlichen aktiven Sensorfläche zu vermeiden.

Bei einer vorteilhaften Ausführungsform der Erfindung ist vorgesehen, daß der Halbleiterchip in einer Aufnahmevertiefung des Gehäuses angeordnet ist, und daß das Substrat die Öffnung der Aufnahmevertiefung überdeckt und an seinem umfangsseitigen Rand mit dem die Aufnahmevertiefung umgrenzenden Randbereich des Gehäuses verbunden ist. Die Aufnahmevertiefung kann beispielsweise durch die Kavität eines handelsüblichen Standard-IC-Gehäuses gebildet oder in eine vorzugsweise mehrere Lagen aufweisende Leiterplatte eingefräst sein. Dabei ist es sogar möglich, daß der Boden der Aufnahmevertiefung einen Anschlag für den Halbleiterchip bildet, an dem sich der Halbleiterchip beim Auftreten eines den Meßbereich des Drucksensors überschreitenden Drucks mit seiner der aktiven Sensorfläche abgewandten Rückseite abstützt. Der Drucksensor des Halbleiterbauelements weist dadurch eine hohe Überdruckfestigkeit auf. In der Aufnahmevertiefung ist der Halbleiterchip außerdem vor mechanischer Beschädigung geschützt.

Besonders vorteilhaft ist, wenn die elastische Trägeranordnung und Halbleiterchip eine auswechselbare Baueinheit bilden, wenn an der Trägeranordnung mit den elektrischen Leiterbahnen verbundene Druckkontakte vorgesehen sind, die in Gebrauchsstellung mit den Anschlußkontakten des Gehäuses zusammenwirken und wenn zum Fixieren der Baueinheit in Gebrauchsstellung Einspannmittel vorgesehen sind. Die den Halbleiterchip mit dem Drucksensor und der aktiven Sensorfläche aufweisende Baueinheit kann dann beispielsweise in einem Laboratorium auf einfache Weise ausgewechselt werden.

Eine besonders vorteilhafte Ausführungsform der Erfindung sieht vor, daß das Gehäuse eine Einsatzöffnung für die Baueinheit aufweist, daß das Gehäuse an der Einsatzöffnung mit einem zumindest eine Ein- und eine Auslaßöffnung für ein zu untersuchendes Medium aufweisenden Anschlußteil lösbar verbindbar ist, daß die Druckkontakte bei in die Einsatzöffnung eingesetzter Baueinheit an der dem Anschlußteil abgewandten Rückseite des Substrats angeordnet sind und dort gegen die Anschlußkontakte des Gehäuses abgestützt sind, und daß die dem Anschlußteil zugewandte Vorderseite des Substrats von dem Anschlußteil direkt oder indirekt über eine das Durchgangslochs des Substrats umgrenzende Dichtung druckbeaufschlagt ist. Bei in die hinter der Einsatzöffnung befindliche Aufnahmevertiefung des Gehäuseteils eingesetzter, in Gebrauchsstellung befindlicher Baueinheit greifen an einer der Flachseiten des vorzugsweise als Folie ausgebildeten elastischen Substrats direkt oder indirekt über eine Dichtung oder dergleichen das Anschlußteil und an der anderen Flachseite des Substrats die in der Aufnahmevertiefung befindlichen Anschlußkontakte des Gehäuses an. Dabei ist das Substrat zwischen dem Anschlußteil und dem die Aufnahmevertiefung aufweisenden Gehäuse eingespannt, so daß die mit den Leiterbahnen verbundenen Druckkontakte des Substrats durch die Rückstellkraft des elastischen Substratwerkstoffs an die ihnen zugeordneten Anschlußkontakte des Gehäuses angedrückt werden. Durch die Elastizität des Substratwerkstoffs werden die Druckontakte besonders gleichmäßig und mit konstanter Andruckkraft an die Gegenkontakte angedrückt. Dadurch ergibt sich eine gute Langzeitstabilität der elektrischen Verbindungen zwischen den Druck- und den Gegenkontakten. Das mit der Einsatzöffnung des Gehäuses verbindbare, die Ein- und Auslaßöffnung aufweisende Anschlußteil kann beispielsweise ein Teil eines Pumpengehäuses einer Pumpe zum Zuführen oder Umwälzen eines zu untersuchenden Mediums sein.

Nachfolgend ist ein Ausführungsbeispiel der Erfindung anhand der Zeichnung näher erläutert. Es zeigen:
- Fig.1: einen Querschnitt durch ein einen Drucksensor und einen Halbleiterchip aufweisendes Halbleiterbauelement, wobei der Halbleiterchip an einem elastisch biegbaren Substrat relativ zu dem Gehäuse des Halbleiterbauelements bewegbar in einer kavität des Gehäuses angeordnet ist,
- Fig.2: einen Querschnitt durch die in Fig.1 gezeigte Baueinheit mit dem Substrat und dem Halbleiterchip in gegenüber Fig.1 vergrößerter Darstellung,
- Fig.3: eine Unteransicht der in Fig.2 gezeigten Baueinheit und
- Fig.4: eine Aufsicht auf die in Fig.2 gezeigte Baueinheit.

Ein im ganzen mit 1 bezeichnetes Halbleiterbauelement weist einen Drucksensor und einen Halbleiterchip 2 auf. Für eine zusätzliche Funktion des Halbleiterbauelements 1 hat der Halbleiterchip 2 eine Halbleiter-Struktur 3 mit einer oberflächenaktiven Sensorfläche. Die Struktur kann aus dotiertem oder undotiertem Halbleitermaterial, aus Metall und/oder aus elektrisch isolierendem Material bestehende Bereiche aufweisen.

Der Halbleiterchip 2 ist über eine elastische Trägeranordnung 4 mit einem Gehäuse 5 verbunden, mittels welcher der Halbleiterchip 2 bei Beaufschlagung mit Druck insgesamt gegen die Rückstellkraft der Trägeranordnung 4 relativ zu dem Gehäuse 5 auslenkbar ist. Dabei wird unter einem Druck sowohl ein Über- als auch ein Unterdruck verstanden.

Zur indirekten Messung eines auf den Halbleiterchip 2 einwirkenden, eine Auslenkung bewirkenden Drucks ist ein mit dem Halbleiterchip 2 zusammenwirkender Lagesensor gebildet. Dieser weist einen Kondensator mit zwei Elektroden 6, 7 auf, von denen die eine Elektrode 6 durch das Substrat des Halbleiterchips 2 und die andere Elektrode 7 durch einen elektrische leitfähigen Bereich gebildet ist, der an einem der rückseitigen, der Trägeranordnung 4 abgewandten Flachseite des Halbleiterchips 2 zugewandten Teilbereich des Gehäuses 5 angeordnet ist. Mittels der elastischen Trägeranordnung 4 sind die Elektroden 6, 7 aufeinander zu und voneinander wegbewegbar, wobei sich deren Abstand verändert. Die Kapazität des Kondensators ist umgekehrt proportional zum Abstand der beiden Elektroden 6, 7, während die Auslenkung des Halbleiterchips 2 etwa linear von dem auf den Halbleiterchip 2 und/oder die Trägeranordnung 4 einwirkenden Druck abhängt. Insgesamt ist daher die Kapazität des Kondensators in guter Näherung proportional zum Druck.

Die Elektroden 6, 7 des Kondensators sind mittels elektrischer Leiterbahnen 8 mit an dem Gehäuse 5 angeordneten elektrischen Kontakten 9 verbunden. Die elektrischen Kontakte 9 sind als Steckkontakte ausgebildet und mit einer vorzugsweise außerhalb des Gehäuses 5 angeordneten Meß- und Auswerteeinheit verbindbar. Diese kann eine Anzeige für den auf den Halbleiterchip 2 und/oder die Trägeranordnung 4 einwirkenden Druck aufweisen. Die Meß- und Auswerteeinrichtung kann beispielsweise ein an sich bekanntes Kapazitätsmeßgerät sein.

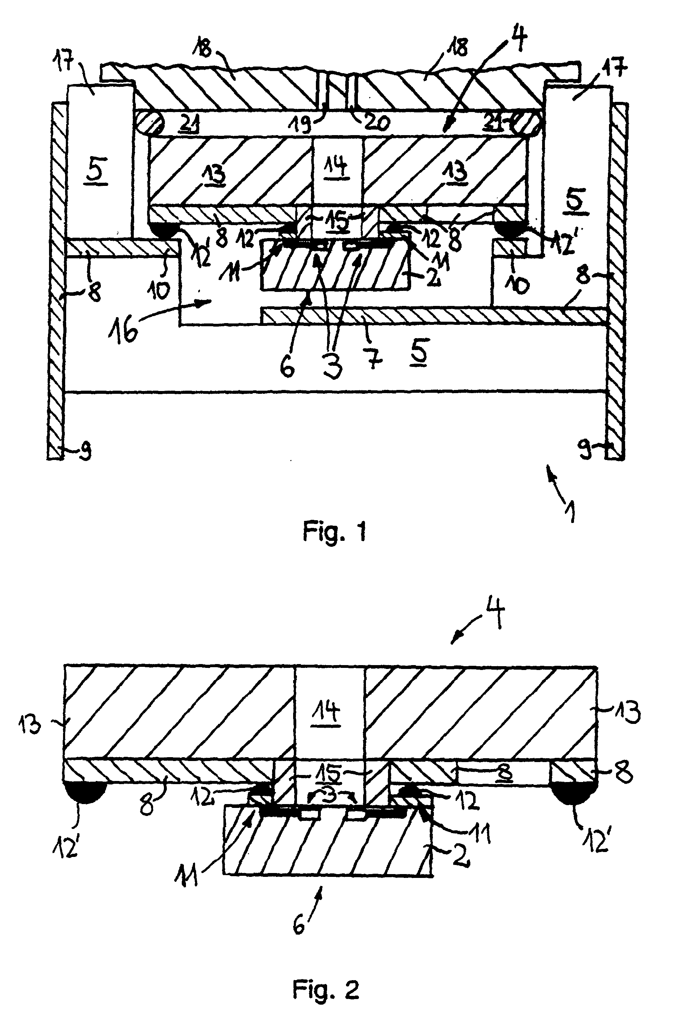

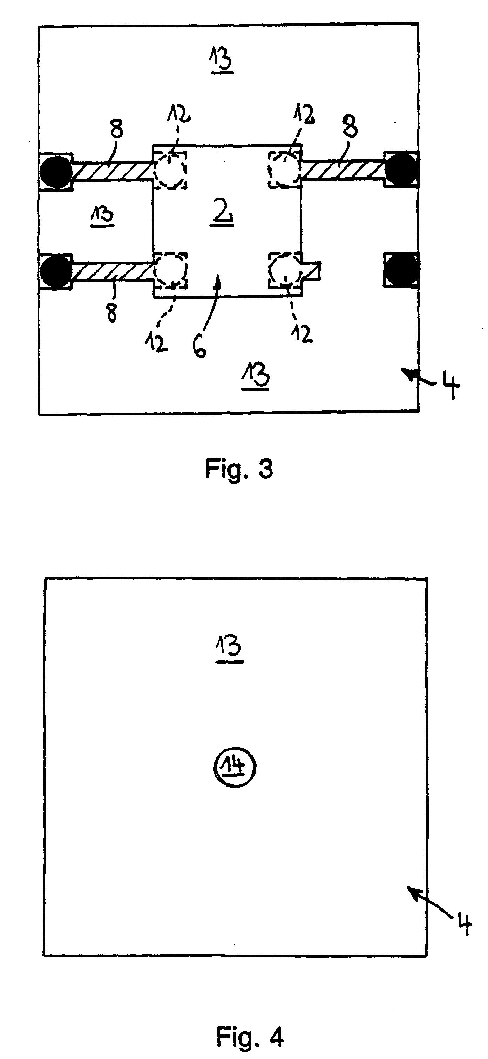

Wie aus Fig. 2 und 3 besonders gut erkennbar ist, weist die elastische Trägeranordnung 4 an ihrer dem Halbleiterchip 2 zugewandten Rückseite elektrische Leiterbahnen 8 auf, welche an dem Gehäuse 5 angeordnete Anschlußkontakte 10 mit Anschlußstellen 11 des Halbleiterchips 2 verbindet. Wie aus Fig. 1 erkennbar ist, sind die Anschlußkontakte 10 mittels an den Gehäuse 5 angeordneter Leiterbahnen 8 mit den außenseitig an dem Gehäuse 5 befindlichen elektrischen Kontakten 9 verbunden. Mittels der Leiterbahnen 8 kann der Halbleiterchip 2 mit der Meß- und Auswerteeinrichtung und/oder einer Stromversorgungseinheit verbunden werden. Die Leiterbahnen 8 können beispielsweise auf die aus elektrisch isolierendem Material bestehende Trägeranordnung 4 und/oder das Gehäuse 5 aufgedruckt oder in anderer Weise aufgebracht sein.

Die Anschlußstellen 11 des Halbleiterchips 2 und die Anschlußkontakte 10 des Gehäuses 5 sind mittels Flip-Chip-Technik mit den Leiterbah-nen 8 der Trägeranordnung 4 verbunden. Die Anschlußstellen 11 sind an der benachbart zu der Struktur 3 befindlichen flachseitigen Oberfläche des Halbleiterchips 2 angeordnet und weisen Bumps 12 auf, die jeweils über die Oberflächenebene des Halbleiterchips 2 vorstehen und an einer ihnen zugeordneten Leiterbahn 8 der Trägeranordnung 4 angreifen. Die Bumps 12 können beispielsweise mit den ihnen zugeordneten Leiterbahnen 8 der Trägeranordnung 4 verlötet, verklebt, mittels eines leitfähige Partikel enthaltenden Kunststoffs oder auf andere Weise fest verbunden sein.

Auch an den den Anschlußstellen 11 des Halbleiterchips abgewandten Endbereichen der Leiterbahnen 8 der Trägeranordnung 4 sind Bumps 12' angeordnet, die an den Anschlußkontakten 10 des Gehäuses 5 angreifen. Die Bumps 12' sind als Druckkontakte ausgebildet, die lösbar mit den Anschlußkontakten 10 des Gehäuses verbindbar sind. Die in Flip-Chip-Technik ausgebildeten elektrischen Verbindungen zwischen der Trägeranordnung 4 und dem Halbleiterchip 2 einerseits und der Trägeranordnung 4 und dem Gehäuse 5 andererseits ermöglichen eine einfache und kostengünstige Montage des Halbleiterbauelements 1.

Die elastische Trägeranordnung 4 weist ein gegen die Rückstellkraft seines Werkstoffs elastisch biegbares, den Halbleiterchip 2 tragendes Substrat 13 auf, das als Folie bzw. Membran ausgebildet ist. Das Substrat 13 kann beispielweise aus Polyimid, Polyethylen oder Polyvinylchlorid bestehen. Wie in der Querschnittsdarstellung in Fig.1 besonders gut erkennbar ist, greift das Substrat 13 brückenartig, mit einander abgewandten Endbereichen an dem Gehäuse 5 an. Etwa mittig zwischen diesen Endbereichen ist der Halbleiterchip 2 angeordnet, der fest mit dem Substrat 13 verbunden ist.

Die die aktive Sensorfläche aufweisende Struktur 3 für die zusätzlichen Funktionen des Halbleiterbauelements 1 ist in einem oberflächennahen Bereich der dem Substrat 13 zugewandten, die Vorderseite des Halbleiterchips 2 bildenden Flachseite des Halbleiterchips 2 angeordnet. Benachbart zu der aktiven Sensor-fläche der Struktur 3 weist das Substrat 13 ein Durchgangsloch 14 auf, welches das Substrat 13 quer zu seiner Erstreckungsebene durchsetzt und die dem Halbleiterchip 2 zugewandte, die Leiterbahnen 8 aufweisende Rückseite des Substrats 13 mit der dieser abgewandten Substrat-Vorderseite verbindet. Wie aus Fig. 1 erkennbar ist, ist der Halbleiterchip 2 mit der aktiven Sensorfläche der Struktur 3 dem Durchgangsloch 14 des Substrats 13 zugewandt und überdeckt dieses.

Zwischen dem Halbleiterchip 2 und dem Substrat 13 ist eine Dichtung 15 angeordnet, die mit einem Endbereich an dem das Durchgangsloch 14 umgrenzenden Rand des Substrats 13 und mit dem gegenüberliegenden Endbereich an der Vorderseite des Halbleiterchips zwischen der aktiven Sensorfläche der Struktur 3 und den Anschlußstellen 11 des Halbleiterchips 2 anliegt. Das Durchgangsloch 14 des Substrats 13, der Halbleiterchip 2 und die Dichtung 15 umgrenzen einen Probenraum, in den ein mit dem Halbleiterbauelement 1 zu untersuchendes flüssiges, gasförmiges, pastöses, gegebenenfalls Partikel enthaltendes Medium eingebracht werden kann. Zum Untersuchen dieses Mediums kann die Halbleiter-Struktur 3 des Halbleiterchips 2 wenigstens einen chemischen Sensor, wie beispielsweise einen Ionen-Sensor oder einen Sensor zum Messen eines Gasgehalts, und/oder wenigstens einen physikalischen Sensor, wie beispielsweise einen Leitfähigkeitssensor und/oder einen Interdigitalkondensator, umfassen.

In dem zu untersuchenden Medium könnnen biologische Komponenten, insbesondere lebende biologische Zellen anzuordnen sein, die gegebenenfalls an der aktiven Sensorfläche des Halbleiterchips 2 angelagert sein können, um diese mitteles der Struktur 3 zu untersuchen. So können beispielsweise intrazelluläre Signale der Zellen mittels der Halbleiterstruktur 3 gemessen werden. In vorteilhafter Weise ermöglicht der in dem Halbleiterbauelement 1 integrierte Drucksensor gleichzeitig auch die Überwachung des Drucks in dem Medium. Es hat sich nämlich gezeigt, daß bestimmte physikalische Zellkenngrößen, wie beispielsweise das Zellpotential, von in dem Medium angeordneten biologischen Zellen durch den Druck in dem Medium beeinflußt werden. So können beispielsweise Druckspitzen in dem die Zellen aufweisenden Medium, die beispielsweise durch eine zum Fördern des Mediums vorgesehene Pumpe verursacht sein können, zu einer unerwünschten Veränderung der Zellkenngrößen führen. Das erfindungsgemäße Halbleiterbauelement 1 ermöglicht es, den Druck in dem Medium zu messen und ggf. bei der Auswertung der gemessenen Zellkenngrößen zu berücksichtigen. Selbstverständlich kann das Halbleiterbauelement 1 aber auch in anderen Anwendungen verwendet werden, bei denen die gleichzeitige Messung eines Drucks und wenigstens einer weiteren physikalischen, chemischen und/oder biologischen Größe gewünscht ist.

Wie aus Fig. 1 erkennbar ist, überdeckt das Substrat 5 der Trägeranordnung 4 eine Öffnung einer Aufnahmevertiefung 16 des Gehäuses 5, in welcher der Halbleiterchip 2 angeordnet ist. In unausgelenkter Lage ist der Halbleiterchip 2 von den die Aufnahmevertiefung 16 seitlich begrenzenden Gehäusewandungen und von dem die Elektrode 7 7 aufweisenden Boden der Aufnahmevertiefung 16 beabstandet.

Die elastische Trägeranordnung 4 und der damit fest verbundene Halbleiterchip 2 bilden eine auswechselbare Baueinheit (Fig.2). Die an der dem Halbleiterchip 2 zugewandten Rückseite des Substrats 13 angeordneten, mit den dort befindlichen Leiterbahnen 8 verbundenen Bumps 12' sind dazu als Druckkontakte ausgebildet, die bei in Gebrauchstellung befindlicher Baueinheit an dem die Aufnahme 16 seitlich umgrenzenden Bereich des Gehäuses 5 anliegen.

Die Aufnahme 16 ist in einer Innenhöhlung des Gehäuses 5 angeordnet, die eine Einsatzöffnung für die Baueinheit aufweist. An dem die Einsatzöffnung umgrenzenden Gehäuserand 17 ist das Gehäuse 5 mit einem Anschlußteil 18 verbindbar, das an seiner in Gebrauchstellung der Innenhöhlung des Gehäuseteils 5 zugewandten Innenwandung eine Einlaßöffnung 19 und eine Auslaßöffnung 20 für das zu untersuchende Medium aufweist. Die Ein- und/oder Auslaßöffnung 19, 20 sind über Kanäle mit dem Pumpraum einer Pumpe verbunden.

In Gebrauchsstellung ist das Substrat 13 der Baueinheit in der Innenhöhlung des Gehäuses 5 zwischen dem Anschlußteil 18 und den Anschlußkontakten 10 des Gehäuses 5 eingespannt. Zwischen dem Substrat 13 und dem Anschlußteil 18 ist eine die Ein- und Auslaßöffnungen 19, 20 umgrenzende Ringdichtung 21 angeordnet, welche den Probenraum innenseitig gegen das Anschlußteil 18 und die dem Halbleiterchip 2 abgewandte Vorderseite des Substrats 13 abdichtet. Die Ringdichtung 21 ist am umfangseitigen Rand des Substrats 13 angeordnet, so daß sich dieses bei einem Überdruck in dem Probenraum von dem Anschlußteil 18 weg- und bei einem Unterdruck in dem Probenraum auf das Anschlußteil 18 zuwölben kann. Durch die Elastizität des zwischen dem Gehäuse 5 und dem Anschlußteil 18 eingespannten Substrats 13 wird einerseits eine gute Dichtwirkung der Ringdichtung 21 erreicht und andererseits werden die an der Rückseite des Substrats 13 befindlichen Bumps 12' gleichmäßig an die in der Innenhöhlung des Gehäuses 5 befindlichen Anschlußkontakte 10 angedrückt.

Zum Austauschen der durch die Trägeranordnung 4 und den Halbleiter-chip 2 gebildeten Baueinheit ist das Anschlußteil 18 mittels in der Zeichnung nicht dargestellter Einspannmittel lösbar mit dem Gehäuse 5 verbindbar.

Erwähnt werden soll noch, daß der Halbleiterchip 2 beim Überschreiten des zulässigen Drucks in dem Probenraum die Elektrode 7 mit seiner Rückseite berührt und sich an der Elektrode 7 bzw. dem Boden des Gehäuses 5 abstützt. Das Halbleiterbauelement 1 weist deshalb eine hohe Überdruckfestigkeit auf. Gegebenenfalls kann bei Berührung der Elektroden 6, 7 mittels einer Meßeinrichtung ein Stromfluß zwischen den Elektroden 6, 7 detektiert und zum Steuern des Drucks in dem Probenraum ausgewertet werden. Insbesondere kann eine zum Fördern des in dem Probenraum befindlichen Mediums vorgesehene Pumpe bei einer Berührung der Elektroden 6, 7 abgeschaltet werden.

## Patentansprüche

1. Halbleiterbauelement (1), mit mindestens einem Drucksensor und einem Halbleiterchip (2), der für wenigstens eine zusätzliche Funktion des Halbleiterbauelements (1) eine Halbleiter-Struktur (3) aufweist, und mit einem mit dem Halbleiterchip (2) verbundenen Gehäuse (5), **dadurch gekennzeichnet,** daß der Halbleiterchip (2) mit dem Gehäuse (5) über eine elastische Trägeranordnung (4) verbunden ist, daß der Halbleiterchip (2) insgesamt gegen die Rückstellkraft des Werkstoffs der Trägeranordnung (4) relativ zu dem Gehäuse (5) auslenkbar ist und daß zur indirekten Messung eines auf den Halbleiterchip (2) einwirkenden, eine Auslenkung bewirkenden Drucks wenigstens ein mit dem Halbleiterchip (2) zusammenwirkender Lagesensor gebildet ist.

2. Halbleiterbauelement nach Anspruch 1, dadurch gekennzeichnet, daß der Lagesensor einen Kondensator mit wenigstens zwei Elektroden (6, 7) aufweist, von denen die eine Elektrode (6) Bestandteil des Halbleiterchips und die andere Elektrode (7) an dem Gehäuse (5) angeordnet ist.

3. Halbleiterbauelement nach Anspruch 1 oder 2, dadurch gekennzeichnet, daß die Trägeranordnung (4) an ihrer dem Halbleiter-chip (2) zugewandten Seite elektrische Leiterbahnen (8) zum Verbinden von an dem Gehäuse (5) angeordneten Anschlußkontakten (10) mit Anschlußstellen (11) des Halbleiterchips (2) aufweist.

4. Halbleiterbauelement nach einem der Ansprüche 1 bis 3, dadurch gekennzeichnet, daß die Leiterbahnen (8) mittels Flip-ChipTechnik mit den Anschlußstellen (11) des Halbleiterchips (2) und/oder den Anschlußkontakten (10) des Gehäuses (5) verbunden sind.

5. Halbleiterbauelement nach einem der Ansprüche 1 bis 4, dadurch gekennzeichnet, daß die Trägeranordnung (4) wenigstens ein gegen die Rückstellkraft seines Werkstoffs elastisch biegbares, den Halbleiterchip (2) tragendes Substrat (13) aufweist, und daß das Substrat (13) vorzugsweise brückenartig, mit einander abgewandten Endbereichen an dem Gehäuse (5) angreifend ausgebildet ist und daß der Halbleiterchip (2) im Verlauf zwischen diesen Endbereichen mit dem Substrat (13) fest verbunden ist.

6. Halbleiterbauelement nach einem der Ansprüche 1 bis 5, dadurch gekennzeichnet, daß das Substrat (13) eine Folie, insbesondere eine Kunststoff-Folie ist.

7. Halbleiterbauelement nach einem der Ansprüche 1 bis 6, dadurch gekennzeichnet, daß das Substrat (13) in dem Zwischenbereich zwischen dem Halbleiterchip (2) und dem Gehäuse (5) zumindest bereichsweise einen verringerten Materialquerschnitt aufweist.

8. Halbleiterbauelement nach einem der Ansprüche 1 bis 7, dadurch gekennzeichnet, daß der Halbleiterchip (2) wenigstens eine als Sensor ausgebildete Halbleiter-Struktur (3) aufweist, die an einer Flachseite des Halbleiterchips (2) eine aktive Sensorfläche hat, daß das Substrat (13) mindestens ein Durchgangsloch (14) aufweist, und daß der Halbleiterchip (2) mit der Sensorfläche dem Durchgangsloch (14) zugewandt mit dem Substrat (13) verbunden ist.

9. Halbleiterbauelement nach einem der Ansprüche 1 bis 8, dadurch gekennzeichnet, daß zwischen dem Substrat (13) und dem Halbleiterchip (2) eine das Durchgangsloch (14) umgrenzende Dichtung (15) angeordnet ist, die insbesondere zwischen der aktiven Sensorfläche und den Anschlußstellen (11) des Halbleiterchips (2) angeordnet ist.

10. Halbleiterbauelement nach einem der Ansprüche 1 bis 9, dadurch gekennzeichnet, daß zwischen dem Halbleiterchip und dem Substrat ein Spalt, insbesondere ein Kapillarspalt gebildet ist und daß in den Spalt eine Kunststoffvergußmasse eingefüllt ist.

11. Halbleiterbauelement nach einem der Ansprüche 1 bis 10, dadurch gekennzeichnet, daß der Halbleiterchip (2) in einer Aufnahmevertiefung (16) des Gehäuses (5) angeordnet ist, und daß das Substrat (13) die Öffnung der Aufnahmevertiefung (16) überdeckt und an seinem umfangsseitigen Rand mit dem die Aufnahmevertiefung (16) umgrenzenden Randbereich des Gehäuses (5) verbunden ist.

12. Halbleiterbauelement nach einem der Ansprüche 1 bis 11, dadurch gekennzeichnet, daß die elastische Trägeranordnung (4) und der Halbleiterchip (2) eine auswechselbare Baueinheit bilden, daß an der Trägeranordnung (4) mit den elektrischen Leiterbah-nen (8) verbundene Druckkontakte vorgesehen sind, die in Gebrauchsstellung mit den Anschlußkontakten (10) des Gehäuses (5) zusammenwirken und daß zum Fixieren der Baueinheit in Gebrauchsstellung Einspannmittel vorgesehen sind.

13. Halbleiterbauelement nach einem der Ansprüche 1 bis 12, dadurch gekennzeichnet, daß das Gehäuse (5) eine Einsatzöffnung für die Baueinheit aufweist, daß das Gehäuse (5) an der Einsatzöffnung mit einem zumindest eine Einlaßöffnung (19) und eine Auslaßöffnung (20) für ein zu untersuchendes Medium aufweisenden Anschlußteil (18) lösbar verbindbar ist, daß die Druckkontakte bei in die Einsatzöffnung eingesetzter Baueinheit an der dem Anschlußteil (18) abgewandten Rückseite des Substrats (13) angeordnet sind und dort gegen die Anschlußkontakte (10) des Gehäuses abgestützt sind, und daß die dem Anschlußteil (18) zugewandte Vorderseite des Substrats (13) von dem Anschlußteil (18) direkt oder indirekt über eine das Durchgangsloch (14) des Substrats (13) umgrenzende Dichtung (15) druckbeaufschlagt ist.

## Claims

1. Semiconductor component (1), having at least one pressure sensor and a semiconductor chip (2) which has a semiconductor structure (3) for at least one additional function of the semiconductor component (1), and having a housing (5) connected to the semiconductor chip (2), **characterised in that** the semiconductor chip (2) is connected to the housing (5) by means of a resilient carrier arrangement (4), in that the semiconductor chip (2) as a whole is deflectable relative to the housing (5) counter to the recoil force of the material of the carrier arrangement (4) and in that at least one position sensor co-operating with the semiconductor chip (2) is formed for indirectly measuring any pressure acting on the semiconductor chip (2) and causing deflection.

2. Semiconductor component according to claim 1, characterised in that the position sensor has a capacitor with at least two electrodes (6, 7), one electrode (6) being part of the semiconductor chip while the other electrode (7) is mounted on the housing (5).

3. Semiconductor component according to claim 1 or 2, characterised in that the carrier arrangement (4) has, on its side facing the semiconductor chip (2), printed conductors (8) for connecting contacts (10) provided on the housing (5) to terminals (11) on the semiconductor chip (2).

4. Semiconductor component according to one of claims 1 to 3, characterised in that the printed conductors (8) are connected to the terminals (11) of the semiconductor chip (2) and/or the contacts (10) on the housing (5) by flip chip technology.

5. Semiconductor component according to one of claims 1 to 4, characterised in that the carrier arrangement (4) has at least one substrate (13) which is elastically flexible counter to the recoil force of its material and which supports the semiconductor chip (2), and in that the substrate (13) preferably engages on the housing (5) in the manner of a bridge, with end portions facing away from each other, and in that the semiconductor chip (2) is fixedly attached to the substrate (13) in the section between these end portions.

6. Semiconductor component according to one of claims 1 to 5, characterised in that the substrate (13) is a film, especially a plastics film.

7. Semiconductor component according to one of claims 1 to 6, characterised in that the substrate (13) has a reduced cross section of material, at least in places, in the intermediate region between the semiconductor chip (2) and the housing (5).

8. Semiconductor component according to one of claims 1 to 7, characterised in that the semiconductor chip (2) has at least one semiconductor structure (3) in the form of a sensor which has an active sensor surface on a flat side of the semiconductor chip (2), in that the substrate (13) has at least one through-hole (14), and in that the semiconductor chip (2) is connected to the substrate (13) with the sensor surface facing the through-hole (14).

9. Semiconductor component according to one of claims 1 to 8, characterised in that between the substrate (13) and the semiconductor chip (2) is provided a gasket (15) surrounding the through-hole (14), which is disposed in particular between the active sensor surface and the terminals (11) of the semiconductor chip (2).

10. Semiconductor component according to one of claims 1 to 9, characterised in that between the semiconductor chip (2) and the substrate there is a slot, particularly a capillary slot, and in that a plastics compound is introduced into the slot.

11. Semiconductor component according to one of claims 1 to 10, characterised in that the semiconductor chip (2) is disposed in an accommodating recess (16) in the housing (5), and in that the substrate (13) covers the opening of the accommodating recess (16) and is connected, at its peripheral edge, to the edge portion of the housing (5) surrounding the accommodating recess (16).

12. Semiconductor component according to one of claims 1 to 11, characterised in that the resilient carrier arrangement (4) and the semiconductor chip (2) form a removable assembly, in that pressure contacts connected to the electric printed conductors (8) are provided on the carrier arrangement, these contacts co-operating with the connecting contacts (10) of the housing (5) in the position of use, and in that clamping means are provided for fixing the component in the position of use.

13. Semiconductor component according to one of claims 1 to 12, characterised in that the housing (5) has an insertion aperture for the assembly, in that the housing (5) is releasably connectable at the insertion aperture to a connecting member (18) having at least one inlet aperture (19) and an outlet aperture (20) for a medium which is to be investigated, in that the pressure contacts are disposed on the back of the substrate (13) remote from the connecting member (18) when the assembly is installed in the insertion aperture and are supported there on the connecting contacts (10) of the housing, and in that the front of the substrate (13) facing the connecting member (18) has pressure exerted on it by the connecting member (18), directly or indirectly via a gasket (15) surrounding the through-hole (14) of the substrate (13).

## Revendications

1. Dispositif semi-conducteur (1) comprenant au moins un capteur de pression et une puce à semi-conducteur (2), laquelle présente une structure semi-conductrice (3) pour au moins une fonction supplémentaire du dispositif semi-conducteur (1), ainsi qu'un boîtier (5) relié à la puce à semi-conducteur (2), **caractérisé par le fait** que la puce à semi-conducteur (2) est reliée au boîtier (5) par un dispositif de support élastique (4), que la puce à semi-conducteur (2) peut se déplacer dans son ensemble par rapport au boîtier (5) en contrant la force de rappel du matériau du dispositif de support (4) et que, pour la mesure indirecte d'une pression agissant sur la puce à semi-conducteur (2) et provoquant un déplacement, il est formé au moins un capteur de position coopérant avec la puce à semi-conducteur (2).

2. Dispositif semi-conducteur selon la revendication 1, caractérisé par le fait que le capteur de position présente un condensateur à au moins deux électrodes (6, 7), dont l'une (6) fait partie intégrante de la puce à semi-conducteur (2) et l'autre (7) est aménagée sur le boîtier (5).

3. Dispositif semi-conducteur selon la revendication 1 ou 2, caractérisé par le fait que le dispositif de support (4) présente, sur sa face tournée vers la puce à semi-conducteur (2), des pistes conductrices électriques (8) pour la connexion de contacts de raccordement (10) aménagés sur le boîtier (5) avec des points de raccordement (11) de la puce à semi-conducteur (2).

4. Dispositif semi-conducteur selon l'une des revendications 1 à 3, caractérisé par le fait que les pistes conductrices (8) sont reliées aux points de raccordement (11) de la puce à semi-conducteur (2) et/ou aux contacts de raccordement (10) du boîtier (5) au moyen de la technique flip chip.

5. Dispositif semi-conducteur selon l'une des revendications 1 à 4, caractérisé par le fait que le dispositif de support (4) présente au moins un substrat (13) déformable élastiquement contre la force de rappel de son matériau et portant la puce à semi-conducteur (2), que le substrat (13) se présente de préférence sous forme de pont, avec des extrémités opposées portant sur le boîtier (5) et que la puce à semi-conducteur (2) est solidaire du substrat (13) sur le parcours entre ces extrémités.

6. Dispositif semi-conducteur selon l'une des revendications 1 à 5, caractérisé par le fait que le substrat (13) est une feuille, en particulier une feuille plastique.

7. Dispositif semi-conducteur selon l'une des revendications 1 à 6, caractérisé par le fait que le substrat (13) présente dans la zone intermédiaire entre la puce à semi-conducteur (2) et le boîtier (5), au moins par endroits, une section de matériau réduite.

8. Dispositif semi-conducteur selon l'une des revendications 1 à 7, caractérisé par le fait que la puce à semi-conducteur (2) présente au moins une structure semi-conductrice (3) formant capteur qui possède, sur une face plane de la puce à semi-conducteur (2), une surface sensitive active, que le substrat (13) présente au moins un trou de passage (14) et que la puce à semi-conducteur (2), avec la surface sensitive tournée vers le trou de passage (14), est reliée au substrat (13).

9. Dispositif semi-conducteur selon l'une des revendications 1 à 8, caractérisé par le fait qu'entre le substrat (13) et la puce à semi-conducteur (2) est disposé un joint (15) entourant le trou de passage (14), ce joint étant disposé plus particulièrement entre la surface sensitive active et les points de raccordement (11) de la puce à semi-conducteur (2).

10. Dispositif semi-conducteur selon l'une des revendications 1 à 9, caractérisé par le fait qu'entre la puce à semi-conducteur (2) et le substrat (13) est formée une fente, en particulier une fente capillaire, et que cette fente est remplie de compound plastique.

11. Dispositif semi-conducteur selon l'une des revendications 1 à 10, caractérisé par le fait que la puce à semi-conducteur (2) est située dans une cavité de logement (16) du boîtier (5) et que le substrat (13) recouvre l'ouverture de la cavité de logement (16) et est relié par son bord périphérique à la zone marginale du boîtier (5) délimitant la cavité de logement (16).

12. Dispositif semi-conducteur selon l'une des revendications 1 à 11, caractérisé par le fait que le dispositif de support élastique (4) et la puce à semi-conducteur (2) forment une unité modulaire remplaçable, qu'il est prévu sur le dispositif de support (4) des contacts à pression reliés aux pistes conductrices électriques (8), coopérant avec les contacts de raccordement (10) du boîtier (5) en position d'utilisation, et qu'il est prévu des moyens de fixation de l'unité modulaire en position d'utilisation.

13. Dispositif semi-conducteur selon l'une des revendications 1 à 12, caractérisé par le fait que le boîtier (5) comporte une ouverture d'insertion pour l'unité modulaire, que le boîtier (5) peut être relié, par l'ouverture d'insertion, à une pièce de raccordement (18) amovible présentant au moins un orifice d'entrée (19) et un orifice de sortie (20) pour un milieu à analyser, que les contacts à pression, lorsque l'unité modulaire est en place dans l'ouverture d'insertion, sont aménagés sur la face arrière du substrat (13) opposée à la pièce de raccordement (18), où ils s'appuient contre les contacts de raccordement (10) du boîtier, et que la face avant du substrat (13) tournée vers la pièce de raccordement (18) soit soumise à une pression par la pièce de raccordement (18) directement ou indirectement par l'intermédiaire d'un joint (15) entourant le trou de passage (14) du substrat (13).
